# EUROPÄISCHE PATENTSCHRIFT

(11) **EP 1 138 422 B1**
(45) Veröffentlichungstag und Bekanntmachung des Hinweises auf die Patenterteilung: **24.09.2003**
(21) Anmeldenummer: 01105845.0
(22) Anmeldetag: 09.03.2001
(51) Int. Cl.: B23B 31/02, B23P 11/02, H05B 6/14

(54) **Schrumpfgerät für Werkzeuge, insbesondere Hartmetallwerkzeuge**
Shrinking apparatus for tools, specially hard metal tools
Appareil de frettage pour outils, spécialement des outils en métal dur

(30) Priorität: 25.03.2000 DE 10015074
(43) Veröffentlichungstag der Anmeldung: 04.10.2001
(73) Patentinhaber: Emuge-Werk Richard Glimpel Fabrik für Präzisionswerkzeuge (vormals Moschkau & Glimpel), D-91207 Lauf (DE)
(72) Erfinder: Rabe, Dieter, 91207 Lauf (DE)
(74) Vertreter: Matschkur, Lindner Blaumeier Patent- und Rechtsanwälte

(56) Entgegenhaltungen:
- WO-A-01/89758
- WO-A-99/12699

## Beschreibung

Die Erfindung bezieht sich auf ein Schrumpfgerät zum raschen Ein- und Ausschrumpfen von Werkzeugen, insbesondere Hartmetallwerkzeugen, in sogenannte Schrumpfspannfutter unter Verwendung einer Induktionsheizspule.

Ein solches Schrumpfgerät ist in der WO-A-99/12699 offenbart.

Unter einem Schrumpfspannfutter versteht man eine Werkzeugaufnahme, bei der das darin zu halternde Werkzeug dadurch gehaltert ist, dass zunächst die gegenüber dem Schaftdurchmesser des Werkzeugs etwas kleinere Aufnahmebohrung des Schrumpfspannfutters durch Erwärmung erweitert und dann das Werkzeug eingesteckt ist, woraufhin das Futter wiederum abgekühlt wird, so dass es sich zusammenzieht und damit stark klemmend um den Schaft des Werkzeugs legt. Umgekehrt erfolgt das Entnehmen des Werkzeugs wiederum durch lokale Erwärmung des umgebenden Futters, wobei es wegen der unvermeidlichen Wärmeübertragung auch auf das Werkzeug und damit dessen gleichzeitige Ausdehnung in den meisten Fällen entscheidend darauf ankommt, dass das Schrumpffutter und das Werkzeug unterschiedliche Ausdehnungskoeffizienten aufweisen und dass die Erwärmung sehr rasch erfolgt. Zum Erwärmen der Schrumpfspannfutter ist neben den einfachsten Fällen der Verwendung einer offenen Flamme oder eines Heizluftgebläses mit langen Erwärmungszeiten im Minutenbereich und neben der Erwärmung durch Wärmeübertragung durch ein vorgeheiztes über das Schrumpfspannfutter gestecktes Metallstück - was aber nur bei Spannfuttern mit kleinen Abmessungen praktisch erfolgreich sein kann - auch bereits bekannt, eine Induktionsheizspule in Verbindung mit dem bereits seit Jahrzehnten bekannten Prinzip der Induktionserwärmung zu verwenden, die mit Abstand über das Schrumpfspannfutter geschoben wird, um berührungsfrei eine rasche Erwärmung zu erzielen.

Der Erfindung liegt die Aufgabe zugrunde, ein Schrumpfgerät mit einer derartigen Induktionsheizspule zu schaffen, die ein besonders rasches Ein- und Ausschrumpfen von Werkzeugen auch unterschiedlicher Abmessungen ermöglicht.

Zur Lösung dieser Aufgabe ist erfindungsgemäß vorgesehen, dass auf einem Drehteller eine Mehrzahl von Schrumpfspannfuttern aus para- oder ferromagnetischen materialien positionierbar und von einer Position unterhalb der absenkbaren Induktionsheizspule in eine Kühlposition verbringbar sind.

Durch die erfindungsgemäße Verwendung eines Drehtellers lässt sich auf kleinem Raum ein rasches Ein- und Ausschrumpfen erreichen, da sowohl die Verbringung eines erhitzten Schrumpfspannfutters mit anschließend eingestecktem Werkzeug in eine Kühlposition zur Erzielung der Spannwirkung rasch und einfach möglich ist, als auch umgekehrt stets ein gekühltes Schrumpfspannfutter zur Verfügung steht, um nach rascher Verschiebung in die Arbeitsposition unterhalb der Induktionsheizspule zur Aufnahme für ein Werkzeug aufgeheizt werden zu können.

Mit besonderem Vorteil kann dabei vorgesehen sein, dass der Drehteller Einsteck-Aufnahmen für die Schrumpffutter mit seitlichen Kühlluftführungsnuten aufweist, durch die von unten her Kühlluft an den in die Einsteck-Aufnahmen eingesetzten Schrumpffutter vorbeigeblasen werden kann, so dass diese dadurch gekühlt werden können.

Als besonders zweckmäßig hat es sich dabei erwiesen, wenn auf der Unterseite des Drehtellers Kühlluftführungsstutzen befestigt sind, die Kühlluftauslässen eines Ventilators gegenüberstehen, wobei unterhalb der Position der Induktionsheizspule ein solcher Kühlluftauslass fehlt. Es erfolgt dann stets bei eingeschaltetem Ventilator ein Kühlen aller Schrumpffutter, die in Einsteck-Aufnahmen angeordnet sind, die nicht unter der Induktionsheizspule liegen.

Um das erfindungsgemäße Schrumpfgerät zum Ein- und Ausschrumpfen von Werkzeugen beliebiger Abmessungen einsetzen zu können, kann in Weiterbildung der Erfindung vorgesehen sein, dass die entsprechend den Durchmessern der größten verwendeten Schrumpfspannfutter ausgebildeten Einsteckausnehmungen des Kühltellers von vertieft abgesetzten Schulter zum Einsetzen von Adapterringen zum Anpassen an das jeweilige Schrumpffutter umgeben sind.

In entsprechender Weise kann vorgesehen sein, dass, vorzugsweise in die Adapterring-Schultern umgebende Einsenkungen des Drehtellers einsteckbare, sich nach oben konisch verjüngende Luftleithülsen vorgesehen sind, über die die über die Kühlluftführungsnuten nach oben geblasene Kühlluft gezielt eng an den erhitzten konischen Oberteilen der Schrumpfspannfutter vorbeigeleitet wird, so dass eine optimale Ausnützung der Kühlluft gewährleistet ist.

Bei einem solchen Vorsehen von Luftleithülsen ist die Ausbildung zweckmäßigerweise so getroffen, dass sie unterhalb der ein Auflager für die Induktionsheizspule bildenden Ringflansche der eingesteckten Schrumpffutter enden. Dadurch kann die aufgeschobene Induktionsheizspule als Gegenhalterung dienen, um zu verhindern, dass beim Herausziehen des Werkzeugs aus den aufgeheizten Schrumpfspannfutter dieses mit vom Drehteller abgehoben wird, sofern noch eine gewisse leichte Klemmwirkung vorhanden ist.

Um die Induktionsheizspule besonders rasch und einfach in die Betriebsposition und zum Zwecke eines Weiterdrehen des Drehtellers wieder in eine nach oben verschobene Nichtbetriebsposition verbringen zu können, kann in weiterer Ausgestaltung der Erfindung vorgesehen sein, dass die Induktionsheizspule an einem Tragarm befestigt ist, der an einer seitlich neben dem Drehteller angeordneten Führungssäule vertikal verschiebbar ist, wobei bevorzugt der Tragarm mittels eines Seilzugs, der am oberen Ende der Führungssäule über eine Rolle umgelenkt ist, mit einem Gegengewicht innerhalb der hohlen Führungssäule verbunden ist. Durch dieses Gegengewicht lässt sich eine leicht gängige über Rollen erreichbare Verschiebbarkeit des Tragarms erreichen, ohne dass gesonderte Arretierungen vorzusehen sind, um den Tragarm in einer angehobenen Stellung zu haltern. Bevorzugt soll dabei die Führungssäule von einem geteilten, oben und unten am Tragarm befestigten den Seilzug verdeckenden Faltenbalg umgeben sein.

Darüber hinaus hat es sich als besonders zweckmäßig erwiesen, dass der Tragarm seine Führungsausnehmung umgebende, zumindest teilweise federnde und durch Stellschrauben verstellbare, in einer horizontalen Ebene angeordnete Tragschenkel für an der Führungssäule anliegende Laufrollen aufweist, wobei die Tragschenkel besonders einfach durch Schlitzungen gebildet einstückig an einem in die Führungsausnehmung des Tragarms eingesetzten Rahmenteil ausgebildet sein können, wobei gemäß einer besonders bevorzugten Ausführungsform der Erfindung oben und unten in der Führungsausnehmung je vier den vier Seiten der Vierkant-Führungssäule über Laufrollen anliegende Tragschenkel angeordnet sein sollen.

Schließlich liegt es auch noch im Rahmen der Erfindung, dass der Tragarm mit einem Kühlgebläse versehen ist, das Kühlluft, die von dem der Induktionsheizspule gegenüberliegenden Ende des Tragarms angesaugt wird, um die Induktionsheizspule leitet und durch Schlitze der sie in Abstand umgebenden Wand des Tragarms wieder austreten lässt. Durch eine drastische Reduzierung von Frequenz und Spannung, die ja bei der Herstellung der Versorgungsspannung für die Induktionsheizspule mittels Wechselumrichtern sehr einfach möglich ist, beispielsweise eine Frequenz von 50 Hertz und 5 Volt Spannung kann das erfindungsgemäße Schrumpfgerät auch zum Entmagnetisieren von durch die Induktionsheizspule geführten Werkzeugen eingesetzt werden.

Des Weiteren lassen sich die Schrumpfzeiten auch noch in etwa halbieren, wenn man die bevorzugt als Keramikspule ausgebildete Induktionsheizspule an die Form des Spannfutters - also dessen konisches Aufnahmeteil für das Werkzeug - anpasst und dadurch eine engere magnetische Kopplung erhält. Darüber hinaus liegt es auch noch im Rahmen der Erfindung zur Temperaturüberwachung und Abschaltung des Umrichters bei Übertemperaturen einen Schalter auf die Keramikspule aufzukleben, die bevorzugt unten frei mit einem Rand zum Gegenhalten beim Ausschrumpfen versehen sein soll. Das direkte Aufsitzen der Keramikspule anstelle des Kunststoffkopfes hat sich als wesentlich geeigneter erwiesen.

Weitere Vorteile, Merkmale und Einzelheiten der Erfindung ergeben sich aus der nachfolgenden Beschreibung eines Ausführungsbeispiels sowie anhand der Zeichnung. Dabei zeigen:
- Fig. 1: eine perspektivische Ansicht eines erfindungsgemäßen Schrumpfgeräts,
- Fig. 2: eine vergrößerte Aufsicht auf den Drehteller zur Aufnahme von vier Schrumpfspannfuttern,
- Fig. 3: einen vergrößerten Schnitt längs der Linie III-III in Fig. 2,
- Fig. 4: eine perspektivische Teilansicht der Führungssäule mit dem Tragarm für die Induktionsheizspule bei abgenommenem VerkleidungsFaltenbalg,
- Fig. 5: eine vergrößerte Aufsicht auf die Führungsausnehmung des Tragarms in Fig. 4, und
- Fig. 6: eine der Fig. 3 in der linken Hälfte entsprechende Schnittdarstellung einer an die Form des Schrumpffutters angepassten Keramikspule.

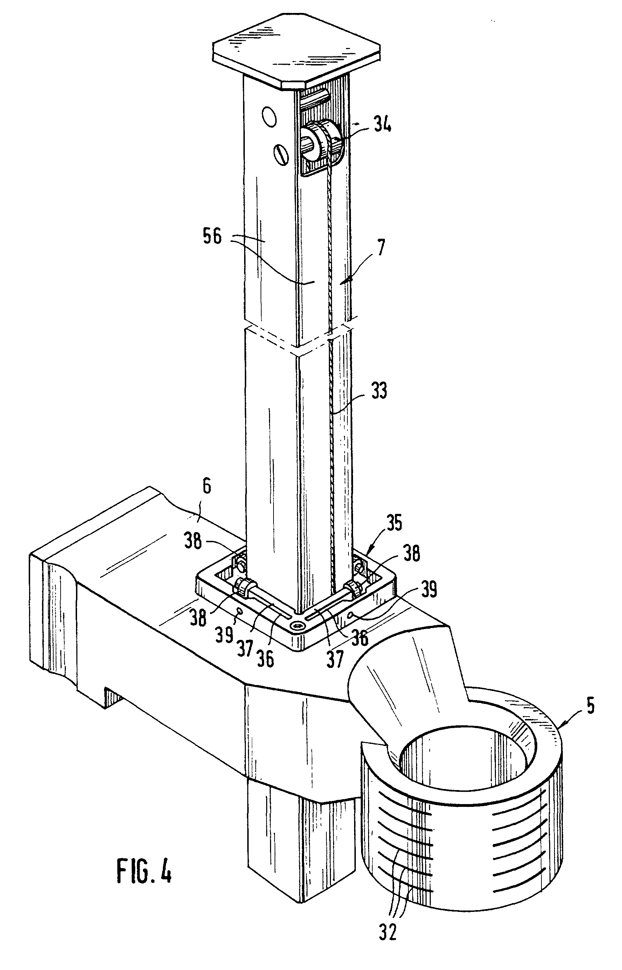

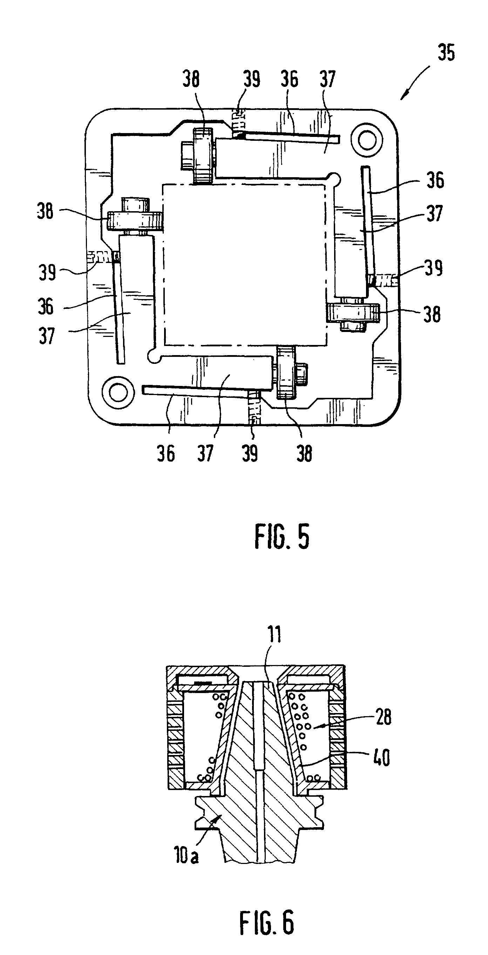

Das erfindungsgemäße Schrumpfgerät umfasst ein auf verstellbaren Fußstützen 1 angeordnetes Gehäuse 2 mit einem auf dessen Oberseite angeordneten Drehteller 3 zur einsteckbaren Aufnahme von vier Schrumpfspannfuttern. Im Gehäuse 2 ist neben dem Antrieb für den Drehteller und der Steuerungseinrichtung eine weiter unten noch näher beschriebene Kühleinrichtung für die Schrumpfspannfutter sowie ein Umrichter angeordnet, um aus der von außen über das Netzkabel mit Drehstrom-Netzstecker 4 zugeführten Spannung, insbesondere handelt es sich dabei um eine Drehspannung, über Wechselumrichter aus der zunächst gleichgerichteten Versorgungsspannung eine Wechselspannung vorgebarer Frequenz mit einer hohen Leistung von mehreren KW zu schaffen, die ohne Verwendung eines Schwingkreises oder Transformators auf der Sekundärseite der im Inneren des Kopfs 5 eines Tragarms 6 angeordneten Induktionsheizspule über Kabel 57 zugeleitet wird. Der Tragarm 6 und dessen vertikale Verschiebung an einer Führungssäule 7, die normalerweise durch einen geteilten Faltenbalg 8a, 8b verdeckt ist, soll anhand der Fig. 4 und 5 weiter unten beschrieben werden. Der Drehteller 3 ist mit vier Einsteck-Aufnahmen 9a bis 9d versehen, in welches sich Schrumpfspannfutter 10a und 10c einstecken lassen, die üblicherweise mit einem oberen konischen Aufnahmeteil 11 mit einer Aufnahmebohrung 12 für ein Werkzeug 13 und einem konischen Aufnahmeteil 14 zum Befestigen in einer Werkzeugmaschine versehen sind. Die beiden Teile 11 und 14 sind durch einen Flansch 15 getrennt.

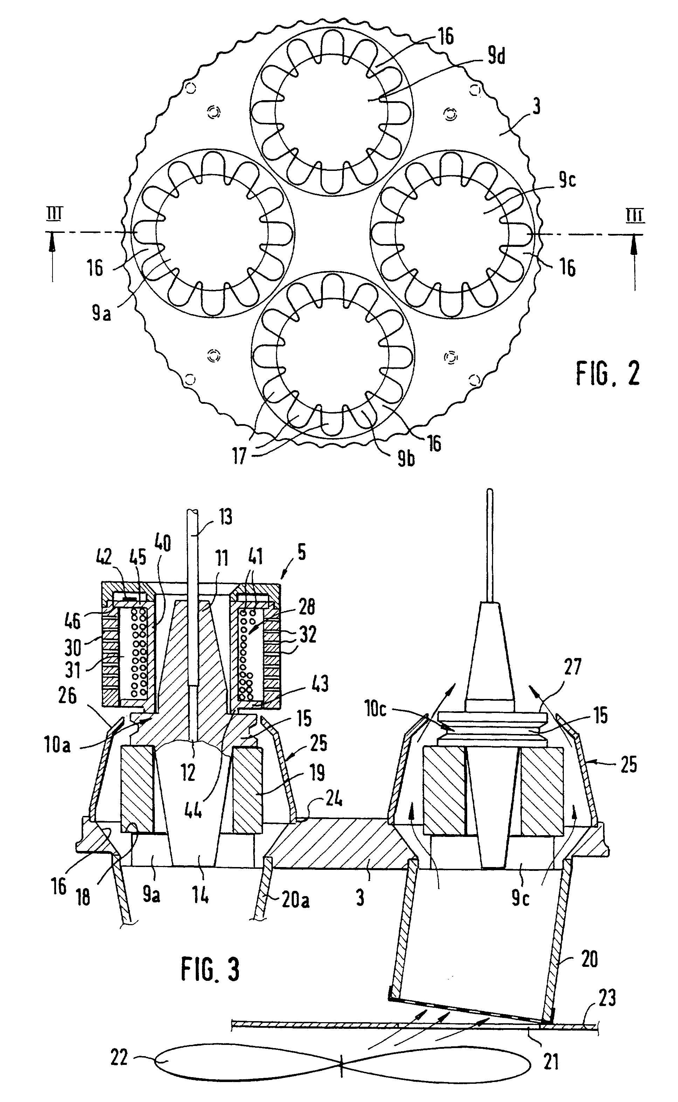

Der konisch auslaufende obere Rand 16 der Einsteckaufnahmen ist mit einer Vielzahl von Kühlluftführungsnuten 17 versehen, durch die von unten Kühlluft an den eingesteckten Schrumpfspannfuttern vorbeigeleitet werden kann. Damit alle gängigen Größen von Schrumpfspannfuttern wahlweise durcheinander mit Hilfe eines erfindungsgemäßen Schrumpfgeräts ein- und ausgeschrumpft werden können, ist erfindungsgemäß vorgesehen, dass die Einsteck-Aufnahme 9a bis 9d von vertieft abgesetzten Schultern 18 umgeben sind, in welche jeweils den gleichen Außenaber unterschiedliche Innenausnehmungsdurchmesser aufweisende Adapterringe 19 einsetzbar sind, um wahlweise Schrumpfspannfutter 10a oder 10c mit unterschiedlichen Größen für unterschiedliche Werkzeuge auf dem Drehteller 3 haltern zu können. Unterhalb der vier Einsteck-Aufnahmen des Drehtellers 3 sind Kühlluftführungsstutzen 20 angeordnet, von denen drei oberhalb von Öffnungen 21 einer vor einem Ventilator 22 angeordneten Platte 23 liegen, während der jeweils vierte Kühlluftführungsstutzen 20a der Einsteck-Aufnahme 9a unterhalb der Induktionsheizspule, also neben der Führungssäule 7, über einen geschlossenen Teil der Wand 23 liegt, so dass hier eine Kühlung nicht stattfindet. Sobald der Drehteller weiter gedreht wird, gelangt dann auch der Kühlluftführungsstutzen des vorher aufgeheizten Schrumpfspannfutters über eine Öffnung 21, so dass dann automatisch eine Kühlung einsetzt. Um eine besonders wirksame Kühlung zu erreichen, sind in die Schultern 18 umgebende eingesenkte Schultern 24 des Drehtellers 3 nach oben sich konisch verjüngende Luftleithülsen 25 eingesteckt, durch welche die von unten zugeführte Kühlluft - wie man insbesondere in Fig. 3 rechts erkennen kann - unmittelbar am Schrumpfspannfutter vorbeigeleitet wird, so dass dieses auch wirksam gekühlt wird. Die gegebenenfalls mit einem oberen versteifenden nach innen weisenden Ringflansch 26 versehenen Luftleithülsen 25 enden unterhalb der Oberfläche 27 des Flansches 15 der Schrumpfspannfutter 10a, 10c, so dass es trotz des Vorhandenseins der Luftleithülsen 25 möglich ist, den Kopf 5 des Tragarms 6 mit der darin angeordneten Induktionsheizspule 28 unmittelbar auf den Flansch 15 aufzusetzen, so dass nach dem Erhitzen und beim Herausziehen des Werkzeugs 13 nicht das ganze Schrumpfspannfutter 10a mit angehoben wird solange noch eine geringe Klemmwirkung zwischen Schrumpfspannfutter und Werkzeug gegeben ist. Im Tragarm 6 ist ein nicht gezeigtes Kühlgebläse angeordnet, welches von rückwärts in Richtung des Pfeils 29 Kühlluft ansaugt und zwischen der Außenwand 30 des Kopfs 5 und der Induktionsheizspule 28 im Spalt 31 vorbeileitet, um diese mit hohen Leistungen betriebene Induktionsheizspule wirksam kühlen zu können. Die Kühlluft tritt dann über Schlitze 32 des Kopfs 5 wieder aus.

Die Induktionsheizspule 28 ist auf einem Spulenkörper 40 aus Keramik unter Verwendung hochtemperaturfesten Kupferlackdrahts 41 gewickelt. Bei 42 erkennt man einen zur Temperaturüberwachung und Abschaltung des Umrichters bei einer etwaigen Übertemperatur dienenden Schalter, der auf den Keramikkörper 40 der Induktionsheizspule 28 geklebt ist. Die Induktionsheizspule 28 mit dem Keramik-Spulenkörper 40 ist in den Kopf 5 eingehängt, so dass der untere Flansch 43 des Spulenkörpers frei liegt. Über einen Rand 44 drückt der Spulenkörper 40 in der in Fig. 3 gezeigten Stellung auf das Schrumpffutter 10a, so dass es beim Ausschrumpfen gehaltert wird und beim Ziehen am Werkzeug nicht von der Aufnahme des Drehtellers 3 abgehoben wird. Die mit dem oberen Randflansch 45 des keramischen Spulenkörpers in eine Ringschulter 46 eingehängte Induktionsheizspule 28 ist mittels einer nicht gezeigten Schraube gegen Verdrehen im Kopf 5 gesichert.

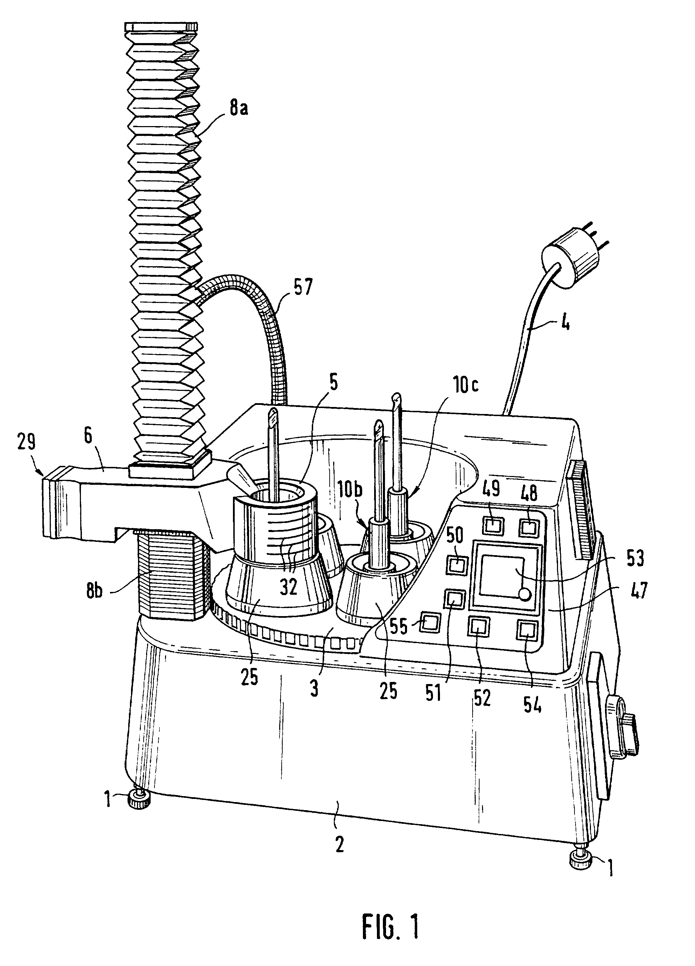

Der Tragarm 6 ist über einen Seilzug 33, der am oberen Ende der Führungssäule 7 über eine Rolle 34 umgelenkt wird, mit einem nicht gezeigten im Inneren der hohlen Führungssäule 7 angeordneten Gegengewicht verbunden, so dass eine leicht gängige und gleichwohl in unterschiedlichen Höhen selbsttätig anhaltende Verstellung des Tragarms möglich ist. Zur Führung des Tragarms 6 an der Führungssäule 7 dienen oben und unten im Tragarm angeordnete Rahmenteile 35, an denen jeweils in einer horizontalen Ebene angeordnete, durch Schlitzungen 36 im Rahmenteil 35 gebildete Tragschenkel 37 ausgebildet sind, an deren freien vorderen Enden Laufrollen 38 gelagert sind. Diese Laufrollen 38 liegen jeweils an einer der Seitenflächen 56 der als Vierkant ausgebildeten Führungssäule 7 an. Wenigstens einige der Tragschenkel 36 können durch Stellschrauben 39, die den Rahmenteil 35 durchsetzen gegen die Seitenflächen 56 der Führungssäule 7 federnd verschwenkt werden, so dass der Anlagedruck der Laufrollen regelbar ist, um die Forderungen nach einer leicht gängigen Verschiebbarkeit mit der nach einem selbsttätigen Stehenbleiben des Tragarms 6 in jeder von Hand eingestellten Position in Einklang zu bringen. Während am oberen Rahmenteil 35, das in Fig. 5 zu erkennen ist, alle vier Tragschenkel 36 durch Stellschrauben 39 einstellbar sind, genügt es bei einem entsprechend ausgebildeten Rahmenteil an der Unterseite des Tragarms 6, wenn nur zwei der Tragschenkel verstellbar ausgebildet sind, während die anderen starr sein können. Die Tragsäule 7 ist, wie man insbesondere aus Fig. 1 erkennen kann, durch einen zweigeteilten Faltenbalg 8a, 8b verkleidet, so dass insbesondere der Seilzug 38 abgedeckt ist.

Die Fig. 6 zeigt eine abgewandelte Ausführungsform einer Induktionsheizspule 28, wobei der Keramik-Spulenkörper 40 entsprechend der konischen Form des Aufnahmeteils 11 des Schrumpfspannfutters 10a ebenfalls konisch ausgebildet ist. Dadurch ergibt sich eine engere magnetische Kopplung, durch die sich die Schrumpfzeiten in etwa halbieren lassen.

Das Bedienungspaneel 47 des erfindungsgemäßen Schrumpfgeräts umfasst eine Störungsanzeige 48 und eine Störungsquittierung 49, einen Einschalter 50 für die Kühlung und einen Ausschalter 51 für die Kühlung, einen Schalter 52 zum Einschalten der Heizung gesteuert über ein Zeitrelais 53 und einen Schalter 54 zum Ausschalten der Heizung. Eine Besonderheit ist der Nachheizschalter 55, mit Hilfe dessen es möglich ist, dann wenn der automatisch ablaufende Heizvorgang noch nicht zum vollständigen Ausschrumpfen geführt hat oder aber das Schrumpfspannfutter noch nicht so aufgeweitet ist, dass das Werkzeug eingesteckt werden kann, ein kurzes Nachheizen von Hand ermöglicht, ohne dass der gesamte Heizzyklus über den Schalter 51 noch einmal von vorne in Gang gesetzt werden muss.

## Patentansprüche

1. Schrumpfgerät zum raschen Ein- und Ausschrumpfen von Werkzeugen, insbesondere Hartmetallwerkzeugen, in sogenannte Schrumpfspannfutter unter Verwendung einer Induktionsheizspule, **dadurch gekennzeichnet, dass** auf einem Drehteller (3) eine Mehrzahl von Schrumpfspannfuttern aus paraoder ferromagnetischen Materialien (10a, 10b, 10c) positionierbar und von einer Position unterhalb der absenkbaren Induktionsheizspule (28) in eine Kühlposition verbringbar sind.

2. Schrumpfgerät nach Anspruch 1, **dadurch gekennzeichnet, dass** der Drehteller (3) Einsteck-Aufnahmen (9a, 9b, 9c, 9d) für die Schrumpfspannfutter (10a, 10b, 10c) mit seitlichen Kühlluftführungsnuten (17) aufweist.

3. Schrumpfgerät nach Anspruch 2, **dadurch gekennzeichnet, dass** auf der Unterseite des Drehtellers (3) Kühlluftführungsstutzen (20, 20a) befestigt sind, die Kühlluftauslässen (21) eines Ventilators (22) gegenüberstehen, wobei unterhalb der Position der Induktionsheizspule (28) ein solcher Kühlluftauslass fehlt.

4. Schrumpfgerät nach einem der Ansprüche 1 bis 3, **dadurch gekennzeichnet, dass** die Einsteck-Aufnahmen (9a, 9b, 9c, 9d) des Kühltellers (3) von vertieft abgesetzten Schultern (18) zum Einsetzen von Adapterringen (19) zum Anpassen an das jeweilige Schrumpfspannfutter (10a, 10b, 10c) umgeben sind.

5. Schrumpfgerät nach einem der Ansprüche 1 bis 4, **gekennzeichnet durch** vorzugsweise in die Adapterring-Schulter (18) umgebende Einsenkungen (24) des Drehtellers (3) einsteckbare sich nach oben konisch verjüngende Luftleithülsen (25).

6. Schrumpfgerät nach Anspruch 5, **dadurch gekennzeichnet, dass** die Luftleithülsen (25) die unterhalb der ein Auflager für die Induktionsheizspule (28) bildenden Ringflansche (15) der eingesteckten Schrumpfspannfutter (10a, 10b, 10c) enden.

7. Schrumpfgerät nach einem der Ansprüche 1 bis 6, **dadurch gekennzeichnet, dass** die Induktionsheizspule (28) an einem Tragarm (6) befestigt ist, der an einer seitlich neben dem Drehteller (3) angeordneten Führungssäule (7) vertikal verschiebbar ist.

8. Schrumpfgerät nach Anspruch 7, **dadurch gekennzeichnet, dass** der Tragarm (6) mittels eines Seilzugs (33), der am oberen Ende der Führungssäule (7) über eine Rolle (34) umgelenkt ist, mit einem Gegengewicht innerhalb der hohlen Führungssäule (7) verbunden ist.

9. Schrumpfgerät nach Anspruch 8, **dadurch gekennzeichnet, dass** die Führungssäule (7) von einem geteilten, oben und unten am Tragarm (6) befestigten den Seilzug (33) verdeckenden Faltenbalg (8a, 8b) umgeben ist.

10. Schrumpfgerät nach einem der Ansprüche 7 bis 9, **dadurch gekennzeichnet, dass** der Tragarm (6) seine Führungsausnehmung umgebende zumindest teilweise federnde und durch Stellschrauben (39) verstellbare in einer horizontalen Ebene angeordneten Tragschenkel (37) für an der Führungssäule (7) anliegende Laufrollen (38) aufweist.

11. Schrumpfgerät nach Anspruch 10, **dadurch gekennzeichnet, dass** die Tragschenkel (36) durch Schlitzung (36) gebildet einstückig an einem in die Führungsausnehmung des Tragarms (6) eingesetzten Rahmenteil (35) angeformt sind.

12. Schrumpfgerät nach Anspruch 10 oder 11, **dadurch gekennzeichnet, dass** oben und unten in der Führungsausnehmung je vier den vier Seiten (40) der Vierkant-Führungssäule (7) über Laufrollen (38) anliegende Tragschenkel (37) angeordnet sind.

13. Schrumpfgerät nach einem der Ansprüche 1 bis 12, **dadurch gekennzeichnet, dass** der Tragarm (6) mit einem Kühlgebläse versehen ist, das Kühlluft um die Induktionsheizspule (28) leitet, die durch Schlitze der sich in Abstand umgebenden Wand (30) des Kopfs (5) des Tragarms (6) austritt.

14. Schrumpfgerät nach einem der Ansprüche 1 bis 13, **dadurch gekennzeichnet, dass** die Induktionsheizspule einen Spulenkörper aus Keramik besitzt.

15. Schrumpfgerät nach Anspruch 14, **dadurch gekennzeichnet, dass** der untere Flansch (43) des keramischen Spulenkörpers (40) frei liegt und mit einem Rand (44) zum Gegenhalten beim Ausschrumpfen versehen ist.

16. Schrumpfgerät nach einem der Ansprüche 1 bis 15, **gekennzeichnet durch** einen, vorzugsweise auf den keramischen Spulenkörper, geklebten Schalter für eine Temperaturüberwachung und Abschalteinrichtung des Umrichters bei Übertemperaturen.

17. Schrumpfgerät nach einem der Ansprüche 1 bis 16, **dadurch gekennzeichnet, dass** die Frequenz und Spannung zum Ansteuern der Induktionsheizspule (28) über die Wechselumrichter zum Realisieren eines Entmagnetisierungsbetriebs umschaltbar sind.

18. Schrumpfgerät nach einem der Ansprüche 1 bis 17, **dadurch gekennzeichnet, dass** der keramische Spulenkörper (14) an die Form des konischen Aufnahmeteils des Schrumpfspannfutters angepasst ist.

19. Schrumpfgerät nach einem der Ansprüche 1 bis 18, **dadurch gekennzeichnet, dass** neben einem taktgesteuerten Heizzyklus zum Betreiben der Induktionsheizspule ein Nachheiztaster zum individuellen Ausgleichen geringer Fehlheizleistungen vorgesehen ist.

## Claims

1. Shrinking apparatus for the rapid shrinking in and out of tools, in particular hard metal tools, in what are known as shrink chucks, using an induction heating coil, **characterised in that** a plurality of shrink chucks of para- or ferromagnetic materials (10a, 10b, 10c) are positionable on a turntable and can be moved from a position under the lowerable induction heating coil (28) into a cooling position.

2. Shrinking apparatus according to claim 1, **characterised in that** the turntable (3) has insertion seats (9a, 9b, 9c, 9d) for the shrink chucks (10a, 10b, 10c) with lateral cooling air conducting grooves (17).

3. Shrinking apparatus according to claim 2, **characterised in that** on the underside of the turntable (3) cooling air conducting nozzles (20, 20a) are fixed, which are opposite to cooling air outlets (21) of a fan (22), wherein under the position of the induction heating coil (28) there is no such cooling air outlet.

4. Shrinking apparatus according to one of claims 1 to 3, **characterised in that** the insertion seats (9a, 9b, 9c, 9d) of the cooling table (3) are surrounded by recessed stepped shoulders (18) for insertion of adapter rings (19) for adaptation to the respective shrink chuck (10, 10b, 10c).

5. Shrinking apparatus according to one of claims 1 to 4, **characterised by** conically upwardly tapering air duct sleeves (25) preferably insertable into counterbores (24) surrounding the adapter ring shoulder (18).

6. Shrinking apparatus according to claim 5, **characterised in that** the air duct sleeves (25) end under the ring flanges (15) of the inserted shrink chucks (10a, 10b, 10c) forming an abutment for the induction heating coil (28).

7. Shrinking apparatus according to one of claims 1 to 6, **characterised in that** the induction heating coil (28) is fixed to a carrying arm (6), which is vertically displaceable on a guide column (7) disposed laterally next to the turntable (3).

8. Shrinking apparatus according to claim 7, **characterised in that** the carrying arm (6) is connected to a counterweight inside the hollow guide column (7) by means of a Bowden cable (33), which is deflected over a pulley (34) at the upper end of the guide column (7).

9. Shrinking device according to claim 8, **characterised in that** the guide column (7) is surrounded by a divided bellows (8a, 8b) fixed to the top and bottom of the carrying arm (6) and covering the Bowden cable (33).

10. Shrinking device according to one of claims 7 to 9, **characterised in that** the carrying arm (6) has carrying shanks (37) which surround its guide recess, are resilient in part, are adjustable by set screws (39), and are disposed in a horizontal plane, for running wheels (38) abutting the guide column (7).

11. Shrinking device according to claim 10, **characterised in that** the carrying shanks (36) are formed by slotting (36) and are integrally moulded on to a frame part (35) inserted into the guide recess of the carrying arm (6).

12. Shrinking device according to claim 10 or 11, **characterised in that** four carrying shanks (37) respectively abutting the four sides (40) of the square guide column (7) via running wheels (38) are disposed at the top and bottom in the guide recess.

13. Shrinking device according to one of claims 1 to 12, **characterised in that** the carrying arm (6) is provided with a cold fan, which conducts cooling air around the induction heating coil (28), which is discharged through the slots of the wall (30) surrounding the same with clearance, of the head (5) of the carrying arm (6).

14. Shrinking device according to one of claims 1 to 13, **characterised in that** the induction heating coil has a coil body of ceramic.

15. Shrinking device according to claim 14, **characterised in that** the lower flange (43) of the ceramic coil body (40) is free and is provided with an edge (44) for support during shrinking out.

16. Shrinking device according to one of claims 1 to 15, **characterised by** a switch adhered preferably to the ceramic coil body for temperature monitoring and switching off of the converter in excessive temperatures.

17. Shrinking device according to one of claims 1 to 16, **characterised in that** the frequency and voltage for triggering the induction heating coil (28) can be switched over via the a.c. converter in order to effect de-magnetising operation.

18. Shrinking device according to one of claims 1 to 17, **characterised in that** the ceramic coil body (14) is adapted to the shape of the conical seat part of the shrink chuck.

19. Shrinking device according to one of claims 1 to 18, **characterised in that** in addition to a time-controlled heating cycle for operating the induction heating coil, a re-heating key is provided for individually compensating slight heating power errors.

## Revendications

1. Dispositif de resserrage destiné au serrage et au desserrage rapide d'outils en particulier d'outils en métaux durs, dans le processus dit de gainage par frettage, par utilisation d'une bobine de chauffage par induction, **caractérisé en ce que**, sur un plateau rotatif (3), une pluralité de gaines de frettage en matériaux para-ou ferro-magnétiques (10a, 10b, 10c) sont positionnables et déplaçables depuis une position située au-dessous de la bobine de chauffage par induction abaissable (28) jusqu'à une position de refroidissement.

2. Dispositif de resserrage selon la revendication 1, **caractérisé en ce que** le plateau rotatif (3) comporte des niches de réception (9a, 9b, 9c, 9d) avec des rainures de guidage latéral d'air de refroidissement (17) pour les gaines de frettage (10a, 10b, 10c).

3. Dispositif de resserrage selon la revendication 2, **caractérisé en ce que** sur le côté inférieur du plateau rotatif (3) sont fixés des manchons de guidage d'air de refroidissement (20, 20a) situés en face des sorties d'air froid (21) d'un ventilateur (22), une telle sortie d'air froid étant omise au-dessous de l'emplacement de la bobine de chauffage à induction (28).

4. Dispositif de resserrage selon l'une quelconque des revendications 1 à 3, **caractérisé en ce que** les niches de réception (9a, 9b, 9c, 9d) du plateau rotatif (3) sont entourées d'épaulements (18) décalés en profondeur en vue de l'insertion de bagues d'adaptation (19) destinées à s'adapter à chacune des gaines de frettage (10a, 10b, 10c).

5. Dispositif de resserrage selon l'une quelconque des revendications 1 à 4, **caractérisé par** des douilles d'amenée d'air (25) effilées coniquement, insérables de préférence dans les renfoncements (24) du plateau rotatif (3) entourant les épaulements à bagues d'adaptation (18).

6. Dispositif de resserrage selon la revendication 5, **caractérisé en ce que** les douilles d'amenée d'air (25) se terminent au-dessous d'une collerette circulaire (15) de la gaine de frettage (10a, 10b, 10c, 10d), insérée en formant un coussinet d'appui pour la bobine de chauffage par induction (28).

7. Dispositif de resserrage selon l'une quelconque des revendications 1 à 6, **caractérisé en ce que** la bobine de chauffage par induction (28) est fixée à un bras de support (6) qui est mobile verticalement sur une colonne de guidage (7) située latéralement à côté du plateau rotatif (3).

8. Dispositif de resserrage selon la revendication 7, **caractérisé en ce que** le bras de support (6) est relié à un contre-poids situé à l'intérieur de la colonne de guidage creuse (7) au moyen d'un câble sous tension (33) qui est orienté à l'extrémité supérieure de la colonne de guidage (7) par-dessus un galet (34).

9. Dispositif de resserrage selon la revendication 8, **caractérisé en ce que** la colonne de guidage (7) est entourée d'un soufflet plissé dissimulant partiellement le câble sous tension (3) et fixé à sa partie inférieure et à sa partie supérieure au bras de support (6).

10. Dispositif de resserrage selon l'une quelconque des revendications 7 à 9, **caractérisé en ce que** le bras de support (6) présente des branches de support (37) situées dans un plan horizontal, au moins partiellement élastique et réglable par des vis de réglage (39), et entourant son évidement de guidage, pour des galets de roulement (38) montés sur la colonne de guidage (7).

11. Dispositif de resserrage selon la revendication 10, **caractérisé en ce que** les branches de support (36) sont créées en une seule pièce par découpage dans un élément formant cadre (35) inséré dans l'évidement de guidage du bras de support (6).

12. Dispositif de resserrage selon la revendication 10 ou 11, **caractérisé en ce que** dans l'évidement de guidage de chacun des quatre côtés (40) de la colonne de guidage quadrangulaire (7) sont disposées, au-dessus et au-dessous, des branches de support (37) appliquées par des galets de roulement (38).

13. Dispositif de resserrage selon l'une quelconque des revendications 1 à 12, **caractérisé en ce que** le bras de support (6) est équipé d'un soufflet de refroidissement qui amène l'air de refroidissement dans la bobine de chauffage par induction (28), qui est ensuite évacué par des fentes pratiquées dans la paroi (30) entourant à une certaine distance la tête (5) du bras de support (6).

14. Dispositif de resserrage selon l'une quelconque des revendications 1 à 13, **caractérisé en ce que** la bobine de chauffage par induction possède un noyau en céramique.

15. Dispositif de resserrage selon la revendication (14), **caractérisé en ce que** la collerette inférieure (43) du noyau en céramique (40) de la bobine repose librement et comporte un rebord (44) en vue de sa retenue au moment du desserrage.

16. Dispositif de resserrage selon l'une quelconque des revendications 1 à 15, **caractérisé par** un interrupteur, de préférence collé sur le noyau en céramique de la bobine, destiné à la surveillance de la température et à la coupure du convertisseur en cas de température en excès.

17. Dispositif de resserrage selon l'une quelconque des revendications 1 à 16, **caractérisé en ce que** la fréquence et la tension de commande de la bobine de chauffage par induction (28) peuvent être commutées par le convertisseur en vue de réaliser un effet de démagnétisation.

18. Dispositif de resserrage selon l'une quelconque des revendications 1 à 17, **caractérisé en ce que** le noyau en céramique (14) de la bobine est adapté à la forme de l'élément de réception conique de la gaine de frettage.

19. Dispositif selon l'une quelconque des revendications 1 à 18, **caractérisé en ce que**, en plus d'un cycle de chauffage commandé en cadence pour le fonctionnement de la bobine de chauffage par induction, il est prévu un palpeur post-chauffage en vue de l'équilibrage de petits écarts de résultats.
